# EUROPEAN PATENT APPLICATION

(11) **EP 2 273 825 A2**
(43) Date of publication of application: **12.01.2011**
(21) Application number: 10168859.6
(22) Date of filing: 10.10.2008
(51) Int. Cl.: H04W 48/16, H04W 64/00, H04W 48/18, H04W 4/02, H04W 16/16

(54) **Locating femto cells with passive assistance from a macro cellular wireless network**

(30) Priority: 12.10.2007 US 979799 P; 09.10.2008 US 248705
(62) Divisional of application: 08837296.6
(71) Applicant: Qualcomm Incorporated, San Diego, CA 92121-1714 (US)
(72) Inventor: Gupta, Rajarshi, San Diego, CA, 92121-1714 (US); Gogic, Aleksandar M., San Diego, CA, 92121-1714 (US)
(74) Representative: Heselberger, Johannes

(57) **Abstract**

A method (system and computer product) for augmenting a user's equipment (UE) database for locating femto cells, the method comprising:
performing RF measurements by a plurality of UEs, wherein RF measurements determine a location of a femto cell based on the UE's location relative to at least one macro cell;
sending the location information from the UEs to a back-end server;
processing at the back-end server the locations to average location for the femto cell;
connecting a UE to the back-end server; and
downloading the average location for the femto cell into the UE's database.

## Description

### BACKGROUND

### Field

The present application relates generally to wireless communications, and more specifically to method and system for storing information to locate a femto cell.

### Background

Wireless communication systems are widely deployed to provide various types of communication (e.g., voice, data, multimedia services, etc.) to multiple users. As the demand for high-rate and multimedia data services rapidly grows, there lies a challenge to implement efficient and robust communication systems with enhanced performance.

In recent years, users have started to replace fixed line communications with mobile communications and have increasingly demanded great voice quality, reliable service, and low prices.

In addition to mobile phone networks currently in place, a new class of small base stations has emerged, which may be installed in a user's home and provide indoor wireless coverage to mobile units using existing broadband Internet connections. Such personal miniature base stations are generally known as access point base stations, or, alternatively, Home Node B (HNB), or Femto cells. Typically, such miniature base stations are connected to the Internet and the mobile operator's network via DSL router or cable modem or other backhaul technologies.

One of the issues with mobile stations and femto cells is how to find a femto cell when it is operating on a macro-cellular network. The mobile station may be on a frequency different than one used by the femto cell. Alternatively, the femto cell may reuse one of several available carrier frequencies. If the mobile is not on that very frequency, it would miss the femto cell, and continue to operate on the macro cell, although it is within the coverage of the femto cell. Additionally, even if there is a way to find a femto cell, mobile may not be authorized to access it (access may be restricted). The problem can be further complicated by the fact that new femto cells are put in operation all the time.

Currently proposed solutions use pilot beacons to signal on other frequencies the presence of the femto cell on the frequency used by femtos. This approach has a weakness because it adds to interference on the other frequencies. Other proposals include constant periodic search for femto cells, which can hurt battery life. Accordingly, there is a need in the art for mobile devices to be able to determine where to search for a femto cell.

### SUMMARY

The preferred embodiment relates to as a system and a method for storing information to locate a femto cell that substantially eliminates one or several disadvantages of the related art.

In one aspect of the preferred embodiment there is a system, method and computer product for augmenting a user's equipment (UE) database with information measured by a femto cell, the method comprising: (a) performing RF measurements by a femto cell to determine a location of the femto cell; (b) connecting the UE to the femto cell; (c) downloading the RF measurements taken by the femto cell pertaining to the location of the femto cell into the UE database.

The method further comprising: (a) taking RF measurements by the UE; (b) comparing current RF measurements taken by the UE with the femto cell own RF measurements to estimate proximity to the femto cell.

Obviously, this requires a protocol to communicate this information between the femto cell and the UE. A simple alternative to a new communication protocol would be for the UE to store the RF measurements to neighboring macro cell at the time when it receives the strongest signal from the associated femto cell.

In other aspects of the preferred embodiment there is a system, method and computer product for augmenting a user's equipment (UE) database with information processed at a back-end server based on a multiple UE reports from the multiple UEs for locating femto cells, the back-end server is part of a macro cell network, the method comprising: (a) performing RF measurements by a plurality of UE, wherein RF measurements determine a location of a femto cell based on the UE's location relative to at least one macro cell; (b) sending the location information to the back-end server; (c) processing at the back-end server the locations to average location for the femto cell; (d) connecting the UE to the back-end server; (e) downloading the average location for the femto cell into the UE's database.

In one embodiment, it does not require an over-the-air protocol to communicate this information between the back-end server and the UE. For this embodiment, an application is used, running over the existing internet protocols (e.g., TCP/IP) used normally by the femto cell.

In other aspects of the preferred embodiment there is a system, method and computer product for augmenting a user's equipment (UE) database with information pertaining to changes in macro environment, the method comprising: (a) storing by the UE RF measurements to neighboring macro cells at the time when the UE receives the strongest signal from a femto cell; (b) performing by the UE RF measurements pertaining to a macro cell phase off; (c) downloading into the UE database the information pertaining to changes in macro cell environment.

The information about previously stored macro cells may remain in the UE database depending on the strength of the pilots.

Additional features and advantages of the invention will be set forth in the description that follows, and in part will be apparent from the description, or may be learned by practice of the invention. The advantages of the invention will be realized and attained by the structure particularly pointed out in the written description and claims hereof as well as the appended drawings.

It is to be understood that both the foregoing general description and the following detailed description are exemplary and explanatory and are intended to provide further explanation of the invention as claimed.

### BRIEF DESCRIPTION OF THE DRAWINGS

FIG. 1 is a exemplary wireless communication system;

FIG. 2 is a an exemplary communication system to enable deployment of access point base stations within a network environment;

FIG. 3 illustrates a method augmenting a user's equipment (UE) database with information measured by a femto cell.

FIG. 4 illustrates refinement of autonomous and customized discovery of femto cells.

FIG. 5 illustrates a pilot phase planning chart.

FIG. 6 illustrates a system used for augmenting a user's equipment (UE) database with information processed at a back-end server based on reports from multiple UEs.

FIG. 7A is a method for augmenting a user's equipment (UE) database with information processed at a back-end server based on reports from multiple UEs.

FIG. 7B illustrates a simplified block diagram of several sample aspects of communication components.

FIG. 8 is an alternate method for augmenting a user's equipment (UE) database.

FIG. 9 depicts an example block diagram of a system 800 in accordance with additional aspects described herein.

### DETAILED DESCRIPTION

The word "exemplary" is used herein to mean "serving as an example, instance, or illustration." Any embodiment described herein as "exemplary" is not necessarily to be construed as preferred or advantageous over other embodiments. The techniques described herein may be used for various wireless communication networks such as Code Division Multiple Access (CDMA) networks, Time Division Multiple Access (TDMA) networks, Frequency Division Multiple Access (FDMA) networks, Orthogonal FDMA (OFDMA) networks, Single-Carrier FDMA (SC-FDMA) networks, etc. The terms "networks" and "systems" are often used interchangeably. A CDMA network may implement a radio technology such as Universal Terrestrial Radio Access (UTRA), cdma2000, etc. UTRA includes Wideband-CDMA (W-CDMA) and Low Chip Rate (LCR). cdma2000 covers IS-2000, IS-95 and IS-856 standards. A TDMA network may implement a radio technology such as Global System for Mobile Communications (GSM). An OFDMA network may implement a radio technology such as Evolved UTRA (E-UTRA), IEEE 802.11, IEEE 802.16, IEEE 802.20, Flash-OFDMO, etc. UTRA, E-IJTRA, and GSM are part of Universal Mobile Telecommunication System (UMTS). Long Term Evolution (LTE) is an upcoming release of UMTS that uses E-UTRA. UTRA, E-UTRA, GSM, UMTS and LTE are described in documents from an organization named "3rd Generation Partnership Project" (3GPP). cdma2000 is described in documents from an organization named "3rd Generation Partnership Project 2" (3GPP2). These various radio technologies and standards are known in the art.

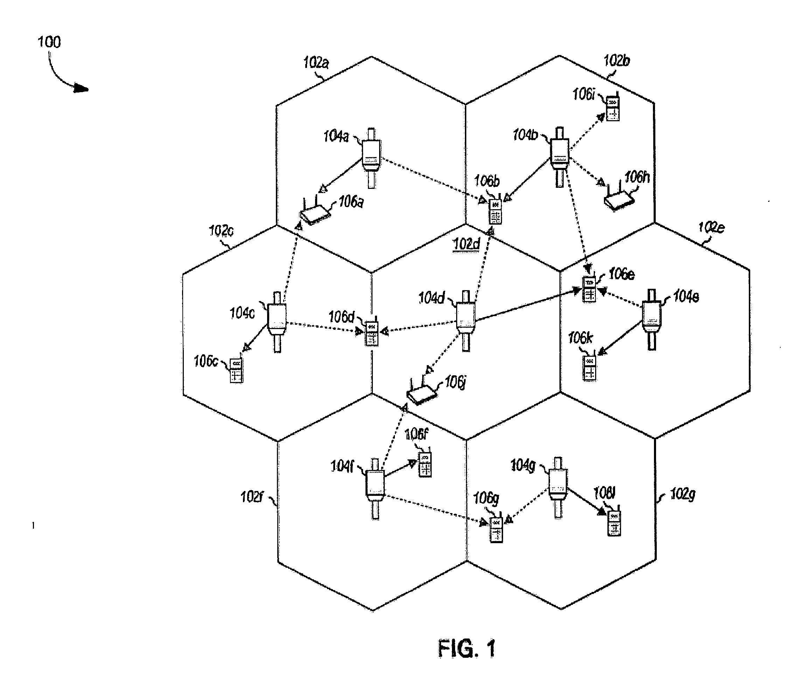

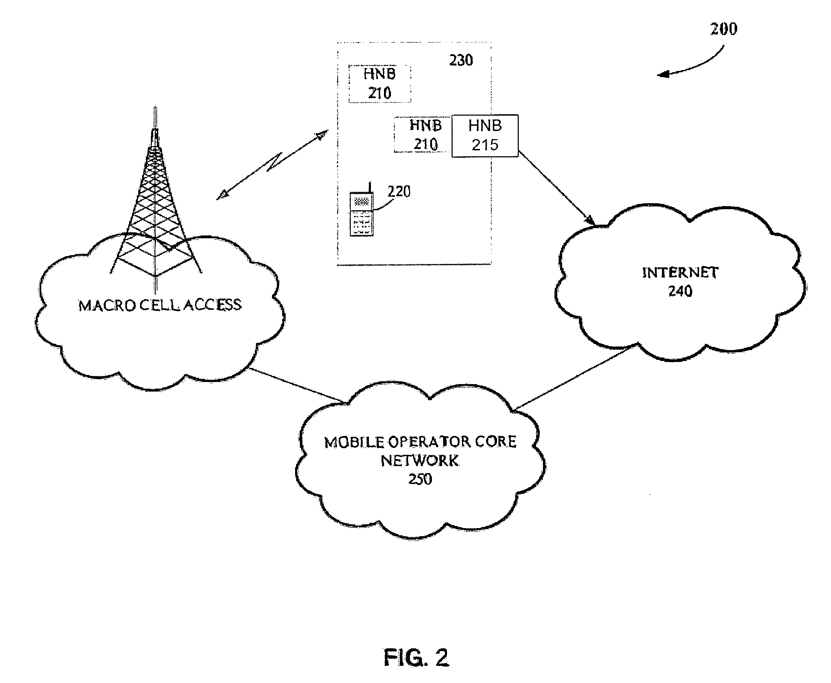

In the description herein, a node that provides coverage over a relatively large area may be referred to as a macro node while a node that provides coverage over a relatively small area (e.g., a residence) may be referred to as a femto node. It should be appreciated that the teachings herein may be applicable to nodes associated with other types of coverage areas. For example, a pico node may provide coverage over an area that is smaller than a macro area and larger than a femto area (e.g., coverage within a commercial building). In various applications, other terminology may be used to reference a macro node, a femto node, or other access point-type nodes. For example, a macro node may be configured or referred to as an access node, base station, access point, eNodeB, macro cell, and so on. Also, a femto node may be configured or referred to as a Home NodeB, Home eNodeB, access point base station, femto cell, and so on. In some implementations, a node may be associated with (e.g., divided into) one or more cells or sectors. A cell or sector associated with a macro node, a femto node, or a pico node may be referred to as a macro cell, a femto cell, or a pico cell, respectively. A simplified example of how femto nodes may be deployed in a network will now be described with reference to FIGS. 1 and 2.

FIG. 1 illustrates an exemplary wireless communication system 100 configured to support a number of users, in which various disclosed embodiments and aspects may be implemented. As shown in FIG. 1, by way of example, system 100 provides communication for multiple cells 102 such as, for example, macro cells 102a-102g, with each cell being serviced by a corresponding access point (AP) or points 104, such as, for example, APs 104a-104g. Each macro cell may be further divided into one or more sectors (not shown). As further shown in FIG. 1, various access terminal (AT) devices 106, including ATs 106a-1061, also known interchangeably as user equipment (UE), or as mobile stations (MS), or as terminal devices, may be dispersed at various locations throughout the system. Each AT 106 may communicate with one or more APs 104 on a forward link (FL) and/or a reverse link (RL) at a given moment, depending upon whether the AT is active and whether it is in soft handoff, for example. The wireless communication system 100 may provide service over a large geographic region. For example, macro cells 102a-102g may cover only a few blocks within a neighborhood or several square miles in a rural environment.

FIG. 2 illustrates an exemplary communication system to enable deployment of femto nodes, also known as femto cells (access point base stations) within a network environment. As shown in FIG. 2, the system 200 includes multiple femto nodes, or, in the alternative, femto cells, access point base stations, Home Node B (HNB) units such as, for example, HNB 210, 215, each being installed in a corresponding relatively small coverage network environment, such as, for example, in one or more sites 230, and such as, for example, being configured to serve associated user equipment 220. Each HNB 210 may be coupled to and further configured to communicate via a wide area network, such as the Internet 240, and to any node on the Internet, including a macro mobile operator core network 250 (also referred to as a "core network"). As shown, there are at least two communication paths between a terminal device 220 and the macro mobile operator core network 250, namely a path including macro cell access, and a path including the Internet 240.

Although embodiments described herein use 3GPP terminology, it is to be understood that the embodiments may be applied to 3GPP (Re199, Re15, Re16, Re17) technology, as well as 3GPP2 (1xRTT, 1xEV-DO Re10, RevA, RevB) technology, WiMax and other known and related technologies. In such embodiments described herein, the owner of the HNB 210 and the HNB 215 subscribes to mobile service, such as, for example, a 3G mobile service, offered through the mobile operator core network 250, and the UE 220 is capable to operate both in macro cellular environment and in residential small scale network environment. Thus, the HNB 210 and the HNB 215 are backward compatible with any existing UE 220.

Furthermore, in addition to the macro cell mobile network 250, the UE 220 can be served by a limited number of HNBs 210, e.g. a HNB 210 located within the user residence 230. For example the UE 220 may be served by the HNB 210, while it does not have access to HNB 215.

One of the issues with UEs and HNBs or femto cells is how to find a femto cell 210 when it is operating on a macro-cellular network 250. The UE 220 may be operating on a frequency different than the one used by the femto cell 210. In the course of searching procedures, where the UE 220 evaluates a neighbor list from the macro cells, it will not find the femto cell 210. Femto cells may use one of several available carrier frequencies. If the UE 220 is not operating on that very frequency, it would miss the femto cell 210, and continue to operate on the macro cell, although it is within coverage of the femto cell 210. Additionally, even if there is a way to find a femto cell 215, the UE 220 may not be authorized to access it (access may be restricted). The problem can be further complicated by the fact that new femto cells are put in operation all the time. The key advantages of the invention include: improved battery performance largely autonomous operation and automatic provisioning of the UEs, without requiring network downloads.

According to embodiments described in detail below, the UE 220 acquires (by learning or otherwise) a database of HNBs or femto cells 210 individualized for that UE 220. The database is stored on the UE 220, and may include for each femto cell 210 the following information: - Carrier frequency - Location (latitude/longitude (LAT/LON), or an alternative) - List of CDMA Pilots and phase offsets in vicinity of the Hot Spot, with E_{C}/Io above a given threshold - Date femto access was last used/acquired by this access terminal or UE 220 - Other identification information, such as System ID for the femto cell, Network ID for the femto cell, and Radio Technology used by the femto cell.

In one embodiment, each entry of the database describes a femto cell location in a non-orthogonal coordinate system comprised of macro pilots visible at that femto location (with qualifying minimum E_{C}/Io), the phase delay of each pilot, and allowed deviation around that nominal phase delay. When the database is already available in the UE 220, it can be used to reduce femto searching, (*i*.*e*., conduct femto search only if there is a match in the database). The UE 220 on a frequency other than F_{F} conducts search on F_{F} only when there is a database match. In one embodiment, the database elements include macro pilot PN offsets, which are all visible by the UE 220 on whatever carrier it is monitoring in the idle state. These PN offsets are accessible to the UE in the course of routine operation in idle state, and the UE does not have to do anything different until there is a database match. Then, the UE 220 starts scanning for the HNB or femto cell 210, which is on a different frequency. Operating this way will reduce battery drainage.

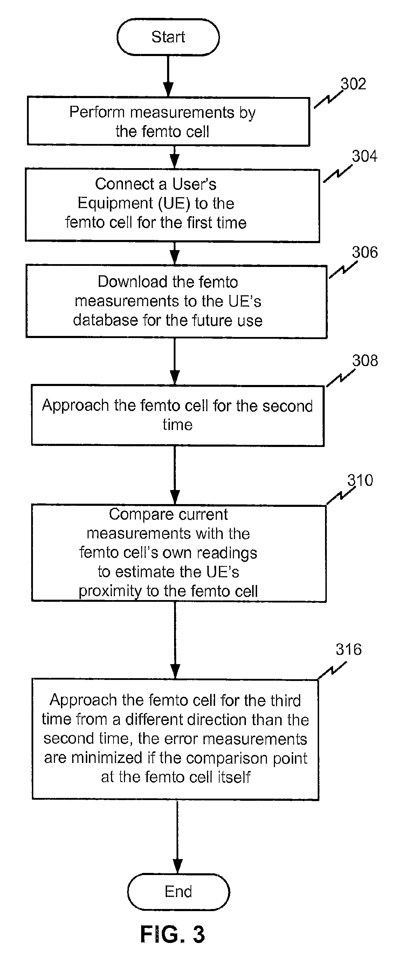

FIG. 3 illustrates a method augmenting a user's equipment (UE) database with information measured by a femto cell. The femto cell 210 will typically have a radio that receives the Macro channels, in order to facilitate various configuration objectives like synchronization, location, pilot PN planning, etc. Consequently, since the Femto 210 in addition to its forward link transmitter, also has a forward link receiver, it itself could measure its RF environment within neighboring Macro cells. Advanced antenna configurations have interference reduction. Furthermore, this measurement is likely to be quite accurate since the Femto 210 is stationary, and can average the measurements over a long period of time. The Femto 210 can spend a lot of time searching for pilots of neighboring macro cells, integrating CDMA signals from very weak pilots. The Femto 210 performs its own measurements in Step 302.

In Step 304, the UE 220 connects to the Femto 210 for the first time. The Femto 210 downloads its measurements or parameters to the UE database in Step 306 to determine location of the femto cell. When the next time the UE 220 approaches the Femto 210 as shown in Step 308, it can compare its current measurements with the Femto's own readings to estimate its proximity to the Femto 210 as shown in Step 310. This has a further advantage that if the UE 220 approaches the Femto 210 again (for the third time) from a different direction than the second time as shown in Step 312, then the error in measurement will be minimized, if the comparison point is at the Femto 210 itself, which makes this system more robust.

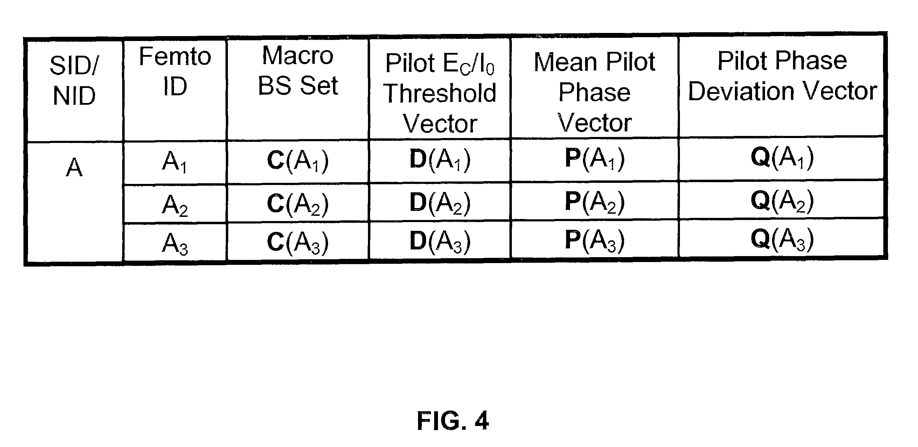

FIG. 4 illustrates refinement of autonomous and customized discovery of femto cells. The location of a femto cell may be described by means of primitives comprised of macro system parameters: within the area described by base station (BS) set C, in which Pilots exceed threshold E_{C}/Io vector D, and have phase P within tolerance Q. All these parameters may be measured with little or no change of CDMA procedure (idle or active state), hence they will have minimal cost in terms of battery life and/or network use, in contrast to e.g. A-GPS geo-location.

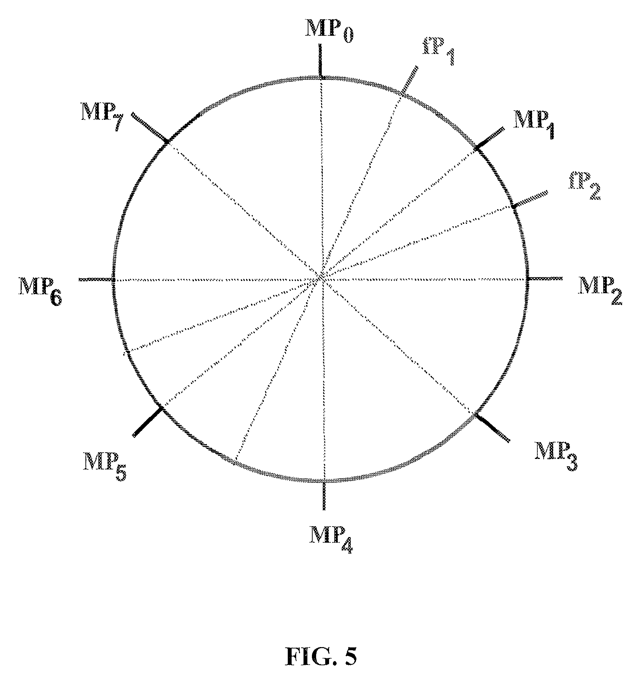

FIG. 5 illustrates pilot phase planning chart. The chart shows that femto cells can be very dense. MP₀ through MP₇ are PN Offsets for macro cells and fP₁ and fP₂ are phase offsets for femto cells. In the long-term, there may be as many femto PN Offsets as for macro cells. This can be achieved in a couple of ways: (1) decrement PILOT_INC, thus creating an odd-numbered PN Offsets for femto cells; and (2) re-program macro macro cellular network by re-assigning odd PN offsets to even ones.

For example, 2π/128 * 2i result in 64 macro PN Offsets (even numbered) and 2π/128 * (2i+1) result in 64 femto PN Offsets (odd numbered PN Offsets). Initially, at low density of femtos, a subset of PN Offsets can be used for femtos (explicitly in neighbor list). By the time femto density gets high, new femto-aware MS will have been fielded and can deal with the entire set of femto PN offsets.

In one embodiment, an over-the-air protocol is required to communicate this information between the Femto 210 and the UE 220. A simple alternative to a new communication protocol would be for the UE 220 to store the RF measurements to neighboring macro cells at the time when it receives the strongest signal from the associated femto cell. Since the strongest signal is likely to correspond to the closest location, this minimizes the error in the UE's database entry. This entry may be rewritten every time the UE samples a stronger signal from the Femto.

Finally, this measurement at the Femto cell 210 can be used to trigger some error conditions at an UE, if there is a wide divergence in the measurements reported by an associated UE, and those made at the Femto.

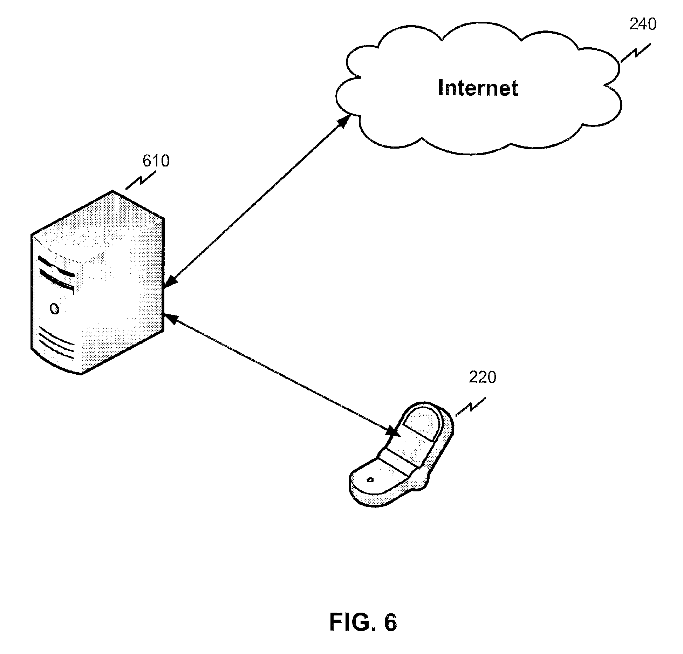

Another alternative to a new communication protocol is when the information is processed at a back-end server based on the multiple UE reports. FIG. 6 illustrates a system used for augmenting a user's equipment (UE) database with information processed at a back-end server based on a multiple UE reports. A plurality of the UEs' 220 performs RF measurements relative to a location of a Femto cell. The back-end server 610 is a part of the micro cell mobile network 250. The UEs' 220 send the UEs' measurements pertaining to the location of the femto cell to the back-end sever 610. The back-end sever 610 processes these locations to average the location for the femto cell. The sever 610 downloads the processed average location for the femto cell into the database of the UE 220 by using an application on the UE 220 that communicates with the back-end server over the Internet. The server 610 stays connected to the Internet 240.

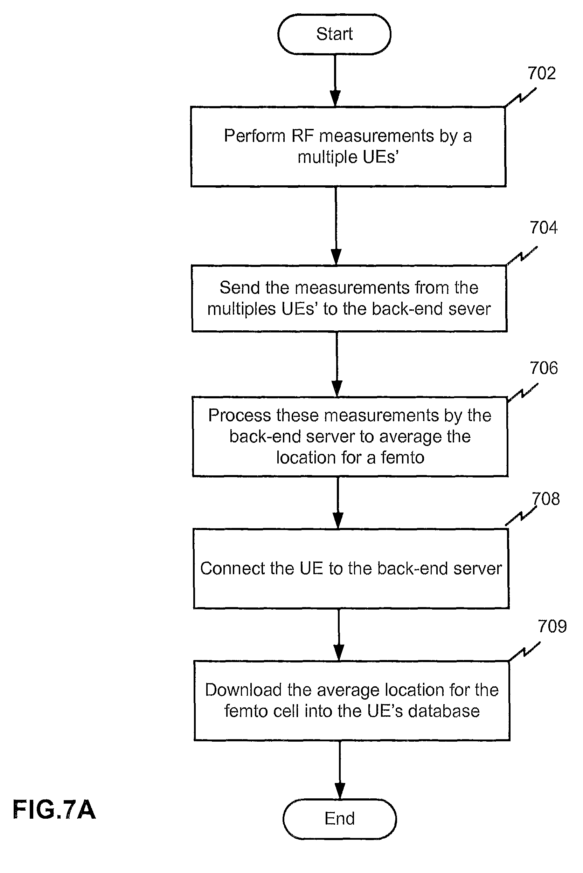

FIG. 7A is a flow diagram illustrating a method for augmenting a user's equipment (UE) database with information processed at a back-end server based on a UE report from multiple UEs' for locating a femto cells. The back-end server 610 is a part of the micro cell mobile network 250. In Step 702 a plurality of UEs' 220 perform RF measurements related to a location of a femto cell. In Step 704 the UEs' 220 send these measurements pertaining to the location of the femto cell to the back-end server 610. In Step 706 the server 610 processes these locations to average the location for the femto cell. In Step 708 connecting the UE 220 to the baclc-end server 610. In Step 709 the back-end server 610 downloads the average location for the femto cell into the UE 220 database.

In one embodiment, this does not require any new over-the-air protocol to communicate this information between the back-end server and the UE. For this embodiment, an application is used, running over the existing internet protocols (e.g., TCP/IP) used normally by the femto cell 210.

It should be appreciated that the teachings herein may be implemented in various types of communication devices. In some aspects, the teachings herein may be implemented in wireless devices that may be deployed in multiple access communication system that may simultaneously support communication for multiple wireless access terminals. Here, each terminal may communicate with one or more access points via transmissions on the forward and reverse links. The forward link (or downlink) refers to the communication link from the access points to the terminals, and the reverse link (or uplink) refers to the communication link from the terminals to the access points. This communication link may be established via a single-in-single-out system, a multiple-in-multiple-out ("MIMO") system, or some other type of system.

A MIMO system employs multiple (*N_{T}*) transmit antennas and multiple (*N_{R}*) receive antennas for data transmission. A MIMO channel formed by the *N_{T}* transmit and *N_{R}* receive antennas may be decomposed into *N_{S}* independent channels, which are also referred to as spatial channels, where *N_{S}* ≤ min{*N_{T}*, *N_{R}*}*.* Each of the *N_{S}* independent channels corresponds to a dimension. The MIMO system may provide improved performance (e.g., higher throughput and/or greater reliability) if the additional dimensionalities created by the multiple transmit and receive antennas are utilized.

A MIMO system may support time division duplex ("TDD") and frequency division duplex ("FDD"). In a TDD system, the forward and reverse link transmissions are on the same frequency region so that the reciprocity principle allows the estimation of the forward link channel from the reverse link channel. This enables the access point to extract transmit beam-forming gain on the forward link when multiple antennas are available at the access point.

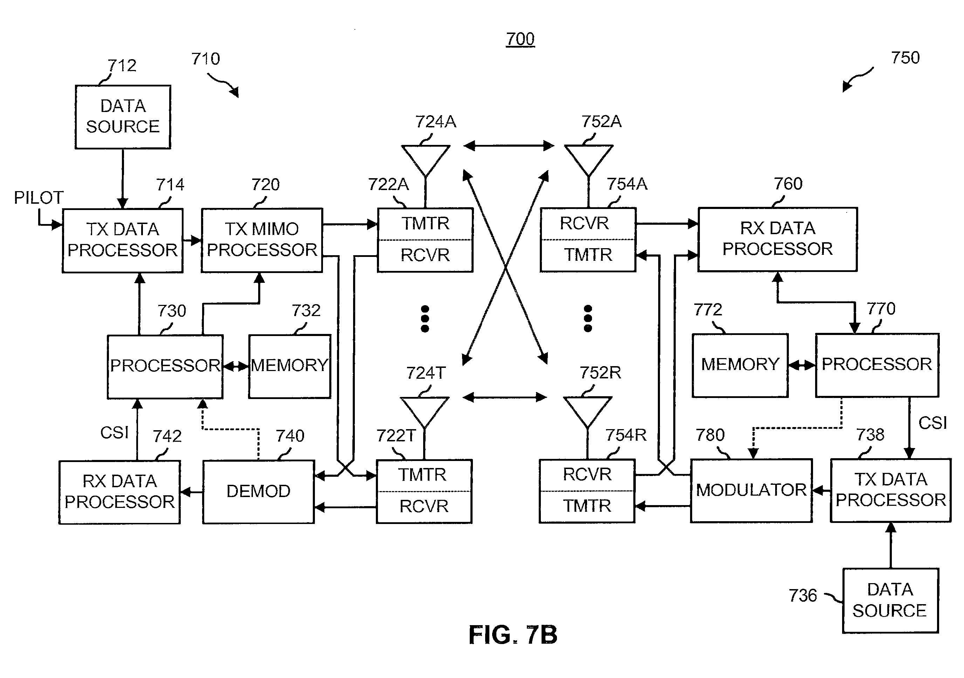

The teachings herein may be incorporated into a node (e.g., a device) employing various components for communicating with at least one other node. FIG. 7B depicts several sample components that may be employed to facilitate communication between nodes. Specifically, FIG. 7B illustrates a wireless device 710 (e.g., an access point) and a wireless device 750 (e.g., an access terminal) of a MIMO system 700. At the device 710, traffic data for a number of data streams is provided from a data source 712 to a transmit ("TX") data processor 714.

In some aspects, each data stream is transmitted over a respective transmit antenna. The TX data processor 714 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QSPK, M-PSK, or M-QAM) selected for that data stream to provide modulation symbols. The data rate, coding, and modulation for each data stream may be determined by instructions performed by a processor 730. A data memory 732 may store program code, data, and other information used by the processor 730 or other components of the device 710.

The modulation symbols for all data streams are then provided to a TX MIMO processor 720, which may further process the modulation symbols (e.g., for OFDM). The TX MIMO processor 720 then provides *N_{T}* modulation symbol streams to *N_{T}* transceivers ("XCVR") 722A through 722T. In some aspects, the TX MIMO processor 720 applies beam-forming weights to the symbols of the data streams and to the antenna from which the symbol is being transmitted.

Each transceiver 722 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transceivers 722A through 722T are then transmitted from *N_{T}* antennas 724A through 724T, respectively.

At the device 750, the transmitted modulated signals are received by *N_{R}* antennas 752A through 752R and the received signal from each antenna 752 is provided to a respective transceiver ("XCVR") 754A through 754R. Each transceiver 754 conditions (e.g., filters, amplifies, and downconverts) a respective received signal, digitizes the conditioned signal to provide samples, and further processes the samples to provide a corresponding "received" symbol stream.

A receive ("RX") data processor 760 then receives and processes the *N_{R}* received symbol streams from *N_{R}* transceivers 754 based on a particular receiver processing technique to provide *N_{T}* "detected" symbol streams. The RX data processor 760 then demodulates, deinterleaves, and decodes each detected symbol stream to recover the traffic data for the data stream. The processing by the RX data processor 760 is complementary to that performed by the TX MIMO processor 720 and the TX data processor 714 at the device 710.

A processor 770 periodically determines which pre-coding matrix to use (discussed below). The processor 770 formulates a reverse link message comprising a matrix index portion and a rank value portion. A data memory 772 may store program code, data, and other information used by the processor 770 or other components of the device 750.

The reverse link message may comprise various types of information regarding the communication link and/or the received data stream. The reverse link message is then processed by a TX data processor 738, which also receives traffic data for a number of data streams from a data source 736, modulated by a modulator 780, conditioned by the transceivers 754A through 754R, and transmitted back to the device 710.

At the device 710, the modulated signals from the device 750 are received by the antennas 724, conditioned by the transceivers 722, demodulated by a demodulator ("DEMOD") 740, and processed by a RX data processor 742 to extract the reverse link message transmitted by the device 750. The processor 730 then determines which pre-coding matrix to use for determining the beam-forming weights then processes the extracted message.

The teachings herein may be incorporated into various types of communication systems and/or system components. In some aspects, the teachings herein may be employed in a multiple-access system capable of supporting communication with multiple users by sharing the available system resources (e.g., by specifying one or more of bandwidth, transmit power, coding, interleaving, and so on). For example, the teachings herein may be applied to any one or combinations of the following technologies: Code Division Multiple Access ("CDMA") systems, Multiple-Carrier CDMA ("MCCDMA"), Wideband CDMA ("W-CDMA"), High-Speed Packet Access ("HSPA," "HSPA+") systems, Time Division Multiple Access ("TDMA") systems, Frequency Division Multiple Access ("FDMA") systems, Single-Carrier FDMA ("SC-FDMA") systems, Orthogonal Frequency Division Multiple Access ("OFDMA") systems, or other multiple access techniques. A wireless communication system employing the teachings herein may be designed to implement one or more standards, such as IS-95, cdma2000, IS-856, W-CDMA, TDSCDMA, and other standards. A CDMA network may implement a radio technology such as Universal Terrestrial Radio Access ("UTRA)", cdma2000, or some other technology. UTRA includes W-CDMA and Low Chip Rate ("LCR"). The cdma2000 technology covers IS-2000, IS-95 and IS-856 standards. A TDMA network may implement a radio technology such as Global System for Mobile Communications ("GSM"). An OFDMA network may implement a radio technology such as Evolved UTRA ("E-UTRA"), IEEE 802.11, IEEE 802.16, IEEE 802.20, Flash-OFDM®, etc. UTRA, E-UTRA, and GSM are part of Universal Mobile Telecommunication System ("UMTS"). The teachings herein may be implemented in a 3GPP Long Term Evolution ("LTE") system, an Ultra-Mobile Broadband ("UMB") system, and other types of systems. LTE is a release of UMTS that uses E-UTRA. Although certain aspects of the disclosure may be described using 3GPP terminology, it is to be understood that the teachings herein may be applied to 3GPP (Re199, Re15, Re16, Re17) technology, as well as 3GPP2 (IxRTT, 1xEV-DO RelO, RevA, RevB) technology and other technologies.

The teachings herein may be incorporated into (e.g., implemented within or performed by) a variety of apparatuses (e.g., nodes). In some aspects, a node (e.g., a wireless node) implemented in accordance with the teachings herein may comprise an access point or an access terminal.

For example, an access terminal may comprise, be implemented as, or known as user equipment, a subscriber station, a subscriber unit, a mobile station, a mobile, a mobile node, a remote station, a remote terminal, a user terminal, a user agent, a user device, or some other terminology. In some implementations an access terminal may comprise a cellular telephone, a cordless telephone, a session initiation protocol ("SIP") phone, a wireless local loop ("WLL") station, a personal digital assistant ("PDA"), a handheld device having wireless connection capability, or some other suitable processing device connected to a wireless modem. Accordingly, one or more aspects taught herein may be incorporated into a phone (e.g., a cellular phone or smart phone), a computer (e.g., a laptop), a portable communication device, a portable computing device (e.g., a personal data assistant), an entertainment device (e.g., a music device, a video device, or a satellite radio), a global positioning system device, or any other suitable device that is configured to communicate via a wireless medium.

An access point may comprise, be implemented as, or known as a NodeB, an eNodeB, a radio network controller ("RNC"), a base station ("BS"), a radio base station ("RBS"), a base station controller ("BSC"), a base transceiver station ("BTS"), a transceiver function ("TF"), a radio transceiver, a radio router, a basic service set ("BSS"), an extended service set ("ESS"), or some other similar terminology.

In some aspects a node (e.g., an access point) may comprise an access node for a communication system. Such an access node may provide, for example, connectivity for or to a network (e.g., a wide area network such as the Internet or a cellular network) via a wired or wireless communication link to the network. Accordingly, an access node may enable another node (e.g., an access terminal) to access a network or some other functionality. In addition, it should be appreciated that one or both of the nodes may be portable or, in some cases, relatively non-portable.

Also, it should be appreciated that a wireless node may be capable of transmitting and/or receiving information in a non-wireless manner (e.g., via a wired connection). Thus, a receiver and a transmitter as discussed herein may include appropriate communication interface components (e.g., electrical or optical interface components) to communicate via a non-wireless medium.

A wireless node may communicate via one or more wireless communication links that are based on or otherwise support any suitable wireless communication technology. For example, in some aspects a wireless node may associate with a network. In some aspects the network may comprise a local area network or a wide area network. A wireless device may support or otherwise use one or more of a variety of wireless communication technologies, protocols, or standards such as those discussed herein (e.g., CDMA, TDMA, OFDM, OFDMA, WiMAX, Wi-Fi, and so on). Similarly, a wireless node may support or otherwise use one or more of a variety of corresponding modulation or multiplexing schemes. A wireless node may thus include appropriate components (e.g., air interfaces) to establish and communicate via one or more wireless communication links using the above or other wireless communication technologies. For example, a wireless node may comprise a wireless transceiver with associated transmitter and receiver components that may include various components (e.g., signal generators and signal processors) that facilitate communication over a wireless medium.

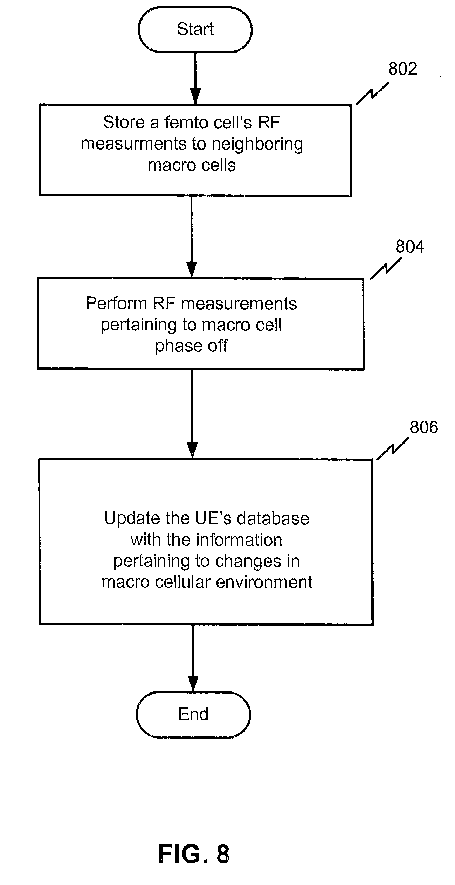

The embodiment below describes another method of augmenting a UE's data base. FIG. 8 illustrates a method of augmenting the UE 220 database based on changes in micro cell environment 250. In Step 802 the UE 220 stores a femto cell's RF measurements to neighboring macro cells at the time when the UE 220 receives the strongest signal. In Step 804 the UE 220 performs RF measurements pertaining to a macro cell phase offsets. In Step 806 the UE 220 data base gets downloaded with the information related to changes in macro cellular environment. The information in the UE 220 database gets updated every time the UE 220 samples a stronger signal from the femto cell. Finally, the RF measurements at the femto cell may be used to trigger an error conditions at the UE 220, if there is a wide divergence in the measurements reported by an associated UE, and those made the femto cell.

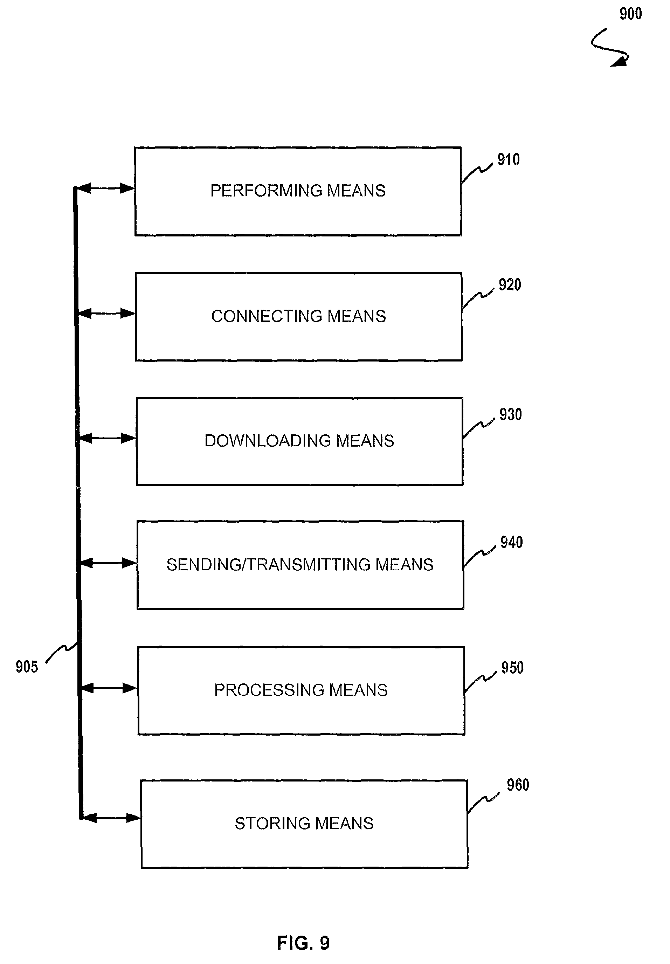

FIG. 9 depicts an example block diagram of a system 900 in accordance with additional aspects described herein. System 900 provides an apparatus that can facilitate locating a femto cell. Specifically, system 900 can include a plurality of modules or means, such as, for example, performing means 910, connecting means 920, downloading means 930, sending or transmitting means 940, processing means 950, and storing means 960, each connected to a communication link 905, and can communicate with other modules or means over communication link 905.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

In the following, further embodiments are described to facilitate understanding:
1. A method for augmenting a user's equipment (UE) database, the method comprising:
   performing radio frequency (RF) measurements by a femto cell to determine a
      location of the femto cell;
   connecting the UE to the femto cell; and
   downloading the RF measurements taken by the femto cell pertaining to the
      location of the femto cell into the UE database.
2. The method of 1, further comprising:
   taking RF measurements by the UE; and
   comparing current RF measurements taken by the UE with the femto cell's own
      RF measurements to estimate proximity to the femto cell.
3. The method of 1, wherein the location of the femto cell comprises of macro cell system parameters: within the area described by a base station (BS) set C, in which pilots exceed threshold E_{C}/Io vector D, and have a mean pilot phase vector P within tolerance Q.
4. The method of 1, wherein the communication of the RF measurements between the femto cell and the UE uses an over-the-air protocol.
5. A user's equipment (UE) comprising:
   a database of femto cells acquired by the UE, individualized for the UE and
      stored on the UE;
   wherein a femto cell takes RF measurements, downloads these RF
      measurements into the UE's database when the UE is connected to the femto cell,
   wherein the RF measurements pertaining to a location of the femto cell.
6. The user's equipment (UE) of 5, wherein the UE takes RF measurements and compares current RF measurements taken by the UE with the femto cell's own measurements to estimate proximity to the femto cell.
7. The user's equipment (UE) of 5, wherein the location of the femto cell comprises macro cell system parameters, within the area described by a base station (BS) set C, in which pilots exceed threshold E_{C}/Io vector D, and have a mean pilot phase vector P within tolerance Q.
8. The user's equipment (UE) of 5, wherein the communication of the RF measurements between the femto cell and the UE uses a protocol.
9. A computer program product comprising:
   a computer readable medium comprising:
      code for causing at least one computer to perform RF measurements by a femto
         cell to determine a location of a femto cell;
      code for causing at least one computer to connect the UE to the femto cell; and
      code for causing at least one computer to download the RF measurements taken
         by the femto cell pertaining to the location of the femto cell into the UE database.
10. The computer program product of 9, wherein said computer readable medium further comprises:
   code for causing at least one computer to take RF measurements by the UE; and
   code for causing at least one computer to compare current RF measurements
      taken by the UE with the femto cell's own RF measurements to estimate proximity to the femto cell.
11. The computer program product of 9, wherein the location of the femto cell comprises of macro cell system parameters: within the area described by a base station (BS) set C, in which pilots exceed threshold E_{C}/Io vector D, and have a mean pilot phase vector P within tolerance Q.
12. The computer program product of 9, wherein the communication of the RF measurements between the femto cell and the UE uses an over-the-air protocol.
13. An apparatus for augmenting a user's equipment (UE) database, comprising:
   means for performing RF measurements by a femto cell to determine a location
      of the femto cell;
   means for connecting the UE to the femto cell; and
   means for downloading the RF measurements taken by the femto cell pertaining
      to the location of the femto cell into the UE database.
14. The apparatus of 13, further comprising:
   means for taking RF measurements by the UE; and
   means for comparing current RF measurements taken by the UE with the femto
      cell's own RF measurements to estimate proximity to the femto cell.
15. The apparatus of 13, wherein the location of the femto cell comprises of macro cell system parameters: within the area described by a base station (BS) set C, in which pilots exceed threshold E_{C}/Io vector D, and have a mean pilot phase vector P within tolerance Q.
16. The apparatus of 13, wherein the communication of the RF measurements between the femto cell and the UE uses an over-the-air protocol.
17. A method for augmenting a user's equipment (UE) database for locating femto cells, the method comprising:
   performing RF measurements by a plurality of UEs, wherein RF measurements
      determine a location of a femto cell based on the UE's location relative to at least one macro cell;
   sending the location information from the UEs to a back-end server;
   processing at the back-end server the locations to average location for the femto
      cell;
   connecting a UE to the back-end server; and
   downloading the average location for the femto cell into the UE's database.
18. The method of 17, wherein the communication of the locations between the back-end server and the UE uses an application running over the existing internet protocol used by the femto cell.
19. The method of 17, wherein the location of the femto cell comprises macro cell system parameters, within the area described by a base station (BS) set C, in which pilots exceed threshold E_{C}/Io vector D, and have a mean pilot phase vector P within tolerance Q.
20. A system for augmenting a user's equipment (UE) database for locating femto cells, the system comprising:
   a plurality of user's equipment (UEs');
   a database of femto cells acquired by the UE, individualized for the UE and
      stored on the UE;
   a back-end server comprising part of a macro cell mobile network;
   wherein the UEs perform RF measurements, wherein RF measurements
      determine a location of a femto cell based on UE's location relative to at least one macro cell;
   wherein the UEs send the location information to the back-end server;
   wherein the back-end server processes the locations to average location for a
      femto cell;
   wherein the UE connects to the back-end server; and
   wherein the back-end server downloads the average location for the femto cell
      into the UE's database.
21. The system of 20, wherein the communication of the locations between the back-end server and the UE comprises an application running over the existing internet protocol used by the femto cell.
22. The system of 20, wherein the location of the femto cell comprises macro cell system parameters: within the area described by a base station (BS) set C, in which pilots exceed threshold E_{C}/Io vector D, and have a mean pilot phase vector P within tolerance Q.
23. A computer program product comprising:
   a computer readable medium comprising
   code for causing at least one computer to perform RF measurements by an UE;
   code for causing at least one computer to perform RF measurements by a
      plurality of UE, wherein RF measurements determine a location of a femto cell based on UE's location relative to at least one macro cell;
   code for causing at least one computer to send the location information from the
      UEs to a back-end server;
   code for causing at least one computer to process at the back-end server the
      locations to average location for a femto cell;
   code for causing at least one computer to connect the UE to the back-end server;
      and
   code for causing at least one computer to download the average location for the
      femto cell into the UE's database.
24. The computer program product of 23, wherein the communication of the locations between the back-end server and the UE uses an application running over the existing internet protocol used by the femto cell.
25. The computer program product of 23, wherein the location of the femto cell comprises macro cell system parameters, within the area described by a base station (BS) set C, in which pilots exceed threshold E_{C}/Io vector D, and have a mean pilot phase vector P within tolerance Q.
26. An apparatus for augmenting a user's equipment (UE) database for locating femto cells, the method comprising:
   means for performing RF measurements by a plurality of UEs, wherein RF
      measurements determine a location of a femto cell based on the UE's location relative to at least one macro cell;
   means for sending the location information from the UEs to a back-end server;
   means for processing at the back-end server the locations to average location for
      the femto cell;
   means for connecting a UE to the back-end server; and
   means for downloading the average location for the femto cell into the UE's
      database.
27. The apparatus of 26, wherein the communication of the locations between the back-end server and the UE uses an application running over the existing internet protocol used by the femto cell.
28. The apparatus of 26, wherein the location of the femto cell comprises macro cell system parameters, within the area described by a base station (BS) set C, in which pilots exceed threshold E_{C}/Io vector D, and have a mean pilot phase vector P within tolerance Q.
29. A method for augmenting a user's equipment (UE) database, the method comprising:
   storing by the UE RF measurements to neighboring macro cells at the time when
      the UE receives a strongest signal from a femto cell, wherein the strongest signal corresponds to a closest location of the femto cell;
   performing by the UE RF measurements pertaining to a macro cell phase offset;
      and
   downloading into the UE's database the information pertaining to changes in
      macro cell environment.
30. The method of 29, further comprising re-writing the entry into the UE's database every time the UE samples a stronger signal from the femto cell.
31. The method of 29, wherein the RF measurements at the femto cell are used to trigger error conditions at the UE, if there is a wide divergence in the measurements reported by an associated UE and gets erased from the UE's database.
32. A system for augmenting a user's equipment (UE) database, the system comprising:
   a user's equipment (UE);
   a database of neighboring macro cells acquired by the UE while visiting a
      neighborhood and stored in the UE's database;
   wherein the UE stores the RF measurements to neighboring macro cells at the
      time when the UE receives the strongest signal from a femto cell, wherein the strongest signal corresponds to the closest location of the femto cell;
   wherein the UE performs the RF measurements pertaining to a macro cell phase
      offsets; and
   downloads into the UE's database the information pertaining to changes in
      macro cell environment.
33. The system of 32, wherein the UE re-writes the entry into the UE's database time every time the UE samples a stronger signal from the femto cell.
34. The system of 32, wherein the RF measurements at the femto cell are used to trigger error conditions at the UE, if there is a wide divergence in the measurements reported by an associated UE and gets erased from the UE's database.
35. A computer-program product, comprising:
   a computer-readable medium comprising
   code for causing at least one computer to store, by the UE, the RF measurements to neighboring macro cells at the time when the UE receives the strongest signal from a femto cell, wherein the strongest signal corresponds to the closest location of the femto cell;
   code for causing at least one computer to perform, by the UE, RF measurements
      pertaining to a macro cell phase offset; and
   code for causing at least one computer to download into the UE's database the
      information pertaining to changes in macro cell environment.
36. An apparatus for augmenting a user's equipment (UE) database, comprising:
   means for storing by the UE RF measurements to neighboring macro cells at the
      time when the UE receives a strongest signal from a femto cell, wherein the strongest signal corresponds to a closest location of the femto cell;
   means for performing by the UE RF measurements pertaining to a macro cell
      phase offset; and
   means for downloading into the UE's database the information pertaining to
      changes in macro cell environment.
37. The apparatus of 36, further comprising means for re-writing the entry into the UE's database every time the UE samples a stronger signal from the femto cell.
38. The apparatus of 36, wherein the RF measurements at the femto cell are used to trigger error conditions at the UE, if there is a wide divergence in the measurements reported by an associated UE and gets erased from the UE's database.

## Claims

1. A method for augmenting a user's equipment (UE) database for locating femto cells, the method comprising:
performing RF measurements by a plurality of UEs, wherein RF measurements determine a location of a femto cell based on the UE's location relative to at least one macro cell;
sending the location information from the UEs to a back-end server;
processing at the back-end server the locations to average location for the
femto cell;
connecting a UE to the back-end server; and
downloading the average location for the femto cell into the UE's database.

2. The method of claim 1, wherein the communication of the locations between the back-end server and the UE uses an application running over the existing internet protocol used by the femto cell.

3. The method of claim 1, wherein the location of the femto cell comprises macro cell system parameters, within the area described by a base station (BS) set C, in which pilots exceed threshold E_{C}/Io vector D, and have a mean pilot phase vector P within tolerance Q.

4. A system for augmenting a user's equipment (UE) database for locating femto cells, the system comprising:
a plurality of user's equipment (UEs');
a database of femto cells acquired by the UE, individualized for the UE
and stored on the UE;
a back-end server comprising part of a macro cell mobile network;
wherein the UEs perform RF measurements, wherein RF measurements
determine a location of a femto cell based on UE's location relative to at least one macro cell;
wherein the UEs send the location information to the back-end server;
wherein the back-end server processes the locations to average location for
a femto cell;
wherein the UE connects to the back-end server; and
wherein the back-end server downloads the average location for the femto
cell into the UE's database.

5. The system of claim 4, wherein the communication of the locations between the back-end server and the UE comprises an application running over the existing internet protocol used by the femto cell.

6. The system of claim 4, wherein the location of the femto cell comprises macro cell system parameters: within the area described by a base station (BS) set C, in which pilots exceed threshold E_{C}/Io vector D, and have a mean pilot phase vector P within tolerance Q.

7. A computer program product comprising:
a computer readable medium comprising
code for causing at least one computer to perform RF measurements by an
UE;
code for causing at least one computer to perform RF measurements by a
plurality of UE, wherein RF measurements determine a location of a femto cell based on UE's location relative to at least one macro cell;
code for causing at least one computer to send the location information
from the UEs to a back-end server;
code for causing at least one computer to process at the back-end server
the locations to average location for a femto cell;
code for causing at least one computer to connect the UE to the back-end
server; and
code for causing at least one computer to download the average location
for the femto cell into the UE's database.

8. The computer program product of claim 7, wherein the communication of the locations between the back-end server and the UE uses an application running over the existing internet protocol used by the femto cell.

9. The computer program product of claim 7, wherein the location of the femto cell comprises macro cell system parameters, within the area described by a base station (BS) set C, in which pilots exceed threshold E_{C}/Io vector D, and have a mean pilot phase vector P within tolerance Q.

10. An apparatus for augmenting a user's equipment (UE) database for locating femto cells, the method comprising:
means for performing RF measurements by a plurality of UEs, wherein RF
measurements determine a location of a femto cell based on the UE's location relative to at least one macro cell;
means for sending the location information from the UEs to a back-end
server;
means for processing at the back-end server the locations to average location for the femto cell;
means for connecting a UE to the back-end server; and
means for downloading the average location for the femto cell into the
UE's database.

11. The apparatus of claim 10, wherein the communication of the locations between the back-end server and the UE uses an application running over the existing internet protocol used by the femto cell.

12. The apparatus of claim 10, wherein the location of the femto cell comprises macro cell system parameters, within the area described by a base station (BS) set C, in which pilots exceed threshold E_{C}/Io vector D, and have a mean pilot phase vector P within tolerance Q.
